(19) Europäisches Patentamt / European Patent Office / Office européen des brevets

(11) **EP 4 196 444 B1**

(12) **EUROPEAN PATENT SPECIFICATION**

(45) Date of publication and mention of the grant of the patent:
**24.07.2024 Bulletin 2024/30**

(21) Application number: **21758623.9**

(22) Date of filing: **03.08.2021**

(51) International Patent Classification (IPC):
**C01G 53/00** $^{(2006.01)}$    **C01G 53/04** $^{(2006.01)}$
**H01M 4/525** $^{(2010.01)}$

(52) Cooperative Patent Classification (CPC):
**C01G 53/006; C01G 53/04; C01G 53/42; C01G 53/50; H01M 4/525;** C01P 2002/52; C01P 2002/60; C01P 2002/72; C01P 2004/50; C01P 2004/51; C01P 2004/61; C01P 2006/11; C01P 2006/12; C01P 2006/14; C01P 2006/16;

(Cont.)

(86) International application number:
**PCT/EP2021/071654**

(87) International publication number:
**WO 2022/033924 (17.02.2022 Gazette 2022/07)**

(54) **PROCESS FOR PRECIPITATING A MIXED HYDROXIDE**

VERFAHREN ZUR AUSFÄLLUNG EINES GEMISCHTEN HYDROXIDS

PROCÉDÉ DE PRÉCIPITATION D'UN HYDROXYDE MIXTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2020 EP 20190970**

(43) Date of publication of application:
**21.06.2023 Bulletin 2023/25**

(73) Proprietor: **BASF SE**
**67056 Ludwigshafen am Rhein (DE)**

(72) Inventors:
• **BERGNER, Benjamin, Johannes, Herbert**
**67056 Ludwigshafen (DE)**
• **BEIERLING, Thorsten**
**67056 Ludwigshafen (DE)**

(74) Representative: **BASF IP Association**
**BASF SE**
**GBI-C006**
**67056 Ludwigshafen (DE)**

(56) References cited:
WO-A1-2019/185433    WO-A1-2020/207901
US-A1- 2004 265 217    US-B2- 6 576 205

(52) Cooperative Patent Classification (CPC): (Cont.)
Y02E 60/10

**Description**

The present invention relates to a process for precipitating a mixed hydroxide of TM wherein TM comprises Ni and at least one of Co and Mn and, optionally, Al, Mg, Zr or Ti from an aqueous solution of salts of such transition metals or of Al or of Mg, wherein such process is carried out in a stirred vessel and comprises the step of introducing a 1 to 40% by weight aqueous solution of ammonia and an aqueous solution of transition metal salts through at least two inlets into said stirred vessel wherein an aqueous solution of alkali metal hydroxide is added separately from the at least two inlets, and wherein at least two inlets are designed as a coaxial mixer that comprises two coaxially arranged pipes through which an aqueous solution of ammonia and an aqueous solution of transition metal salts are introduced into said stirred vessel.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

The electrode material is of crucial importance for the properties of a lithium ion battery. Lithium-containing mixed transition metal oxides have gained particular significance, for example spinels and mixed oxides of layered structure, especially lithium-containing mixed oxides of nickel, manganese and cobalt; see, for example, EP 1 189 296. However, not only the stoichiometry of the electrode material is important, but also other properties such as morphology and surface properties.

Generally, lithium-containing mixed transition metal oxides are prepared using a two-stage process. In a first stage, a sparingly soluble salt of the transition metal(s) is prepared by precipitating it from a solution, for example a carbonate or a hydroxide. This sparingly soluble salt is in many cases also referred to as a precursor. In a second stage, the precipitated salt of the transition metal(s) is mixed with a lithium compound, for example $Li_2CO_3$, LiOH or $Li_2O$, and calcined at high temperatures, for example at 600 to 1100°C.

Existing lithium ion batteries still have potential for improvement, especially with regard to the energy density. For this purpose, the cathode material should have a high specific capacity. It is also advantageous when the cathode material can be processed in a simple manner to give electrode layers of thickness from 20 $\mu$m to 200 $\mu$m, which should have a high density in order to achieve a maximum energy density (per unit volume), and a high cycling stability.

In WO 2012/095381 and WO 2013/117508, processes for the precipitation of hydroxides or carbonates are disclosed wherein vessels with compartments are used. A lot of energy is introduced in the respective compartment(s). Carrying out said process on commercial scale is difficult, though. A process for precipitating a mixed hydroxide of TM wherein TM comprises Ni, Co and Mn from an aqueous solution of salts of such transition metals is disclosed also in WO 2019/185433.

It was an objective of the present invention to provide a process for making precursors of cathode active materials for lithium ion batteries which have a high volumetric energy density and excellent cycling stability. More particularly, it was therefore an objective of the present invention to provide starting materials for batteries which are suitable for producing lithium ion batteries with a high volumetric energy density and excellent cycling stability. It was a further objective of the present invention to provide a process by which suitable starting materials for lithium ion batteries can be prepared.

Without wishing to be bound to any theory, it can be assumed that the lithiation process is depending on the particle diameter, porosity, specific surface area, primary crystal size and number of stacking faults in crystal latter of a precursor. It was an objective of the present invention to provide a process for making precursors which can be lithiated in a very efficient way. More particularly, it was therefore an objective of the present invention to provide starting materials for batteries which can be lithiated in a very efficient way. It was also an objective of the present innovation that the lithiation process becomes less sensitive, for example by a comparable low impact of calcination temperature on electrochemical properties such as the $1^{st}$ discharge capacity. This can be obtained by an improved precursor obtained by the innovative process. Accordingly, the process defined at the outset has been found, hereinafter also referred to as inventive process or process according to the (present) invention. The inventive process may be carried out as a batch process or as a continuous or semi-continuous process. Preferred are continuous processes.

The inventive process is a process for precipitating a mixed hydroxide of TM. In the context of the present invention, "mixed hydroxides" refer to hydroxides and do not only include stoichiometrically pure hydroxides but especially also compounds which, as well as transition metal cations and hydroxide ions, also have anions other than hydroxide ions, for example oxide ions and carbonate ions, or anions stemming from the transition metal starting material, for example acetate or nitrate and especially sulfate.

In one embodiment of the present invention, mixed hydroxides may have 0.01 to 45 mole-% and preferably 0.1 to 40 mole-% of anions other than hydroxide ions, based on the total number of anions of said mixed hydroxide. Sulfate may also be present as an impurity in embodiments in which a sulfate was used as starting material, for example in a percentage of 0.001 to 1 mole%, preferably 0.01 to 0.5 mole-%.

In the context of the present invention, TM comprises Ni and at least one of Co and Mn and, optionally, Al, Mg, Zr or Ti. Preferably, TM is selected from the group consisting of Ni and at least one of Co and Mn and, optionally, Al, Mg, Zr or Ti. Although Al and Mg are not transition metals, in the context of the present invention, solutions of salts of TM are hereinafter also referred to as solutions of transition metals.

In one embodiment of the present invention, TM contains metals according to the general formula (I)

$$Ni_aM^1_bMn_c \qquad (I)$$

where the variables are each defined as follows:

$M^1$ is Co or combinations of Co and at least one element selected from Ti, Zr, Al and Mg,

a is in the range from 0.15 to 0.95, preferably 0.5 to 0.92,

b is in the range from zero to 0.35, preferably 0.03 to 0.2,

c is in the range from zero to 0.8, preferably 0.05 to 0.65,

where a + b + c = 1.0, and at least one of b and c is greater than zero.

In embodiments wherein $M^1$ is of Co and at least one element selected from Ti, Zr, Al and Mg, it is preferred that at least 95 mole-% up to 99.9 mole-% of $M^1$ is Co.

In one embodiment of the present invention, the variables in formula (I) are defined as follows:

a is in the range of from 0.8 to 0.95,
$M^1$ is a combination of Co and at least one element selected from Ti, Zr, Al and Mg, with 95 mole-% up to 99.9 mole-% of $M^1$ being Co,
b is in the range of from 0.03 to 0.2,
c is zero,

and

$$a + b + c = 1.0.$$

In another embodiment of the present invention, the variables in formula (I) are defined as follows:

a is in the range of from 0.6 to 0.93,
$M^1$ is Co or a combination of Co and at least one element selected from Ti, Zr, Al and Mg, with 95 mole-% up to 99.9 mole-% of $M^1$ being Co,
b is in the range of from 0.02 to 0.2,
c is in the range of from 0.05 to 0.2,

and

$$a + b + c = 1.0.$$

In another embodiment of the present invention, the variables in formula (I) are defined as follows:

a is in the range of from 0.15 to 0.5,
b is zero to 0.05,
c is in the range of from 0.55 to 0.8,

and

$$a + b + c = 1.0.$$

In yet another embodiment of the present invention, the variables in formula (I) are defined as follows:

a   is in the range of from 0.6 to 0.95,

b   is zero,

c   is in the range of from 0.4 to 0.05,

and

$$a + c = 1.0.$$

Many elements are ubiquitous. For example, sodium, copper and chloride are detectable in certain very small proportions in virtually all inorganic materials. In the context of the present invention, proportions of less than 0.02 mole % of cations or anions are disregarded. Any mixed hydroxide obtained according to the inventive process which comprises less than 0.02 mole % of sodium is thus considered to be sodium-free in the context of the present invention.

In one embodiment of the present invention the inventive process is a process for precipitating a mixed hydroxide with an average particle diameter (D50) in the range of from 2 to 20 $\mu$m, preferably 2 to 20 $\mu$m, more preferably 4 to 16 $\mu$m, determined by LASER diffraction.

The inventive process is carried out in a stirred vessel. Said stirred vessel may be a stirred tank reactor or a continuous stirred tank reactor. Said continuous stirred tank reactor may be selected from stirred tank reactors that constitute a part of a cascade of stirred tank reactors, for example a cascade of two or more stirred tank reactors, particularly two or three stirred tank reactors.

In the course of the inventive process, an aqueous solution of alkali metal hydroxide and an aqueous solution of transition metals is introduced into said stirred vessel.

In the context of the present invention, aqueous solution of nickel and one of manganese and cobalt and - optionally - at least one more cation such as $Al^{3+}$ or $Mg^{2+}$ is also referred to as aqueous solution of transition metals salts for short.

Aqueous solution transition of metal salts comprises a nickel salt and a cobalt salt and/or a manganese salt. Preferred examples of nickel salts are especially water-soluble nickel salts, i.e. nickel salts which have a solubility of at least 25 g/l and preferably 50 g/l, in distilled water, determined at 20°C. Preferred salts of nickel, cobalt and manganese are in each case, for example, salts of carboxylic salts, especially acetates, and also sulfates, nitrates, halides, especially bromides or chlorides, of nickel, cobalt and manganese, the nickel being present as $Ni^{+2}$, the cobalt being present as $Co^{+2}$, and the manganese being present as $Mn^{+2}$. However, Ti and/or Zr, if applicable, are present in an oxidation state of +4. Aluminum is present in the oxidation sate of +3, and it may be introduced, e.g., as sodium aluminate or as acetate or sulfate of aluminum.

Aqueous solution of transition metal salts may comprise at least one further transition metal salt, preferably two or three further transition metal salts, especially salts of two or three transition metals or of cobalt and aluminum. Suitable transition metal salts are especially water-soluble salts of transition metal(s), i.e. salts which have a solubility of at least 25 g/l, preferably 50 g/l in distilled water, determined at room 20°C. Preferred transition metal salts, especially salts of cobalt and manganese, are, for example, carboxylic acid salts, especially acetates, and also sulfates, nitrates, halides, especially bromides or chlorides, of transition metal, the transition metal(s) preferably being present in the +2 oxidation state. Such a solution preferably has a pH value in the range from 1 to 5, more preferably in the range from 2 to 4.

In one embodiment of the present invention, it is possible to proceed from an aqueous solution of transition metal salts which comprises, as well as water, one or more organic solvents, for example ethanol, methanol or isopropanol, for example up to 15% by volume, based on water. Another embodiment of the present invention proceeds from an aqueous solution of transition metal salts comprising less than 0.1% by weight, based on water, or preferably no organic solvent.

In one embodiment of the present invention, said aqueous solution of transition metal salts used in the inventive process comprises ammonia, ammonium salt or one or more organic amines, for example methylamine or ethylene diamine. Aqueous solution of transition metal salts preferably comprises less than 10 mol% of ammonia or organic amine, based on transition metal M. In a particularly preferred embodiment of the present invention, aqueous solution of transition metal salts does not comprise measurable proportions of either of ammonia or of organic amine.

Preferred ammonium salts may, for example, be ammonium sulfate and ammonium sulfite.

Aqueous solution of transition metal salts may, for example, have an overall concentration of transition metal(s) in the range from 0.01 to 4 mol/l of solution, preferably 1 to 3 mol/l of solution.

In one embodiment of the present invention, the molar ratio of transition metals in aqueous solution of transition metal salts is adjusted to the desired stoichiometry in the cathode material or mixed transition metal oxide to be used as precursor. It may be necessary to take into account the fact that the solubility of different transition metal hydroxides can be different.

Aqueous solution of transition metal salts may comprise, as well as the counterions of the transition metal salts, one or more further salts. These are preferably those salts which do not form sparingly soluble salts with M, or bicarbonates of, for example, sodium, potassium, magnesium or calcium, which can cause precipitation of carbonates in the event of pH alteration. One example of such salts is ammonium sulfate.

In another embodiment of the present invention, aqueous solution of transition metal salts does not comprise any further salts.

In one embodiment of the present invention, aqueous solution of transition metal salts may comprise one or more additives which may be selected from biocides, complexing agents, for example ammonia, chelating agents, surfactants, reducing agents, carboxylic acids and buffers. In another embodiment of the present invention, aqueous solution of transition metal salts does not comprise any additives.

Examples of suitable reducing agents which may be in aqueous solution of transition metal salts are sulfites, especially sodium sulfite, sodium bisulfite ($NaHSO_3$), potassium sulfite, potassium bisulfite, ammonium sulfite, and also hydrazine and salts of hydrazine, for example the hydrogen sulfate of hydrazine, and also water-soluble organic reducing agents, for example ascorbic acid or aldehydes.

Furthermore, an aqueous solution of ammonia is introduced into the stirred tank reactor, hereinafter also referred to as "ammonia solution" or "aqueous ammonia solution". Said ammonia solution contains 1 to 40 % by of ammonia, referring to the weight of said ammonia solution, preferably 10 to 25 % by weight.

Said ammonia solution may comprise other compounds than water and ammonia, for example traces of carbonate due to aging, or of alkali metal hydroxide, for example 0.01 to 5 mol-%, referring to ammonia. Preferably, said ammonia solution does not contain significant amounts of compounds other than ammonia.

The inventive process is carried out in a stirred vessel and includes carrying out the inventive process in a stirred tank reactor or in a continuous stirred tank reactor or in a cascade of at least two continuous stirred tank reactors, for example in a cascade of 2 to 4 continuous stirred tank reactors. It is preferred to carry out the inventive process in a continuous stirred tank reactor. Continuous stirred tank reactors contain at least one overflow system that allows to continuously - or within intervals - withdraw slurry from said continuous stirred tank reactor.

The inventive process comprises the step of introducing an aqueous solution of ammonia and an aqueous solution of transition metal salts through at least two inlets into said stirred vessel wherein at least two inlets are designed as a coaxial mixer that comprises two coaxially arranged pipes through which an aqueous solution of ammonia and an aqueous solution of transition metal salts are introduced into said stirred vessel. This step is also referred to as "introduction step". The aqueous solution of alkali metal hydroxide is introduced separately from the at least two inlets.

The alkali metal hydroxide further required is added separately from the at least two inlets.

The at least two inlets are designed as a coaxial mixer that comprises two coaxially arranged pipes through which an aqueous solution of ammonia and an aqueous solution of transition metal salts are introduced into a stirred vessel. In one embodiment of the present invention, the introduction step is carried out by using two or more coaxially arranged pipes through which an aqueous solution of ammonia and an aqueous solution of transition metal salts are introduced into said stirred vessel. In another embodiment of the present invention, the introduction step is carried out by using exactly one system of coaxially arranged pipes through which an aqueous solution of ammonia and an aqueous solution of transition metal salts are introduced into said stirred vessel.

Even more preferably, the aqueous solution of ammonia and the aqueous solution of transition metal salts are introduced through two inlets into said stirred vessel wherein said two inlets are designed as a coaxial mixer.

In one embodiment, a molar $NH_3$: transition metal ratio of 0.01 to 0.9 and more preferably of 0.05 to 0.65 can be established.

Although it is possible that some shares of aqueous solution of ammonia and of aqueous solution of transition metal salts are introduced at different locations as well, for example up to 30% of aqueous solution of alkali metal hydroxide and up to 30% of aqueous solution of transition metal salts, it is preferred that all aqueous solution of ammonia and of aqueous solution of transition metal salts are introduced through the above arrangement of pipes.

In one embodiment of the present invention, the locations of the introduction of the aqueous solutions of transition metal salts and of ammonia are below the level of liquid in the stirred vessel. In another embodiment of the present invention, the locations of the introduction of the aqueous solutions of transition metal salts and of ammonia are above the level of liquid in the stirred vessel.

In the course of said preferred embodiment of the introduction step, said aqueous solution of ammonia may be introduced through one pipe of a coaxially mixer and said solution of transition metal salts is introduced through the other pipe of said coaxially arranged pipes.

In one embodiment of the present invention, the velocity for introducing aqueous solution of ammonia and aqueous solution of transition metal salts is in the range of from 0.01 to 10 m/s. On large scale, for example in a stirred vessel of 10 m$^3$ or more, velocities of 0.5 to 5 m/s are preferred.

In a preferred embodiment of the present invention, the aqueous solution of transition metal salts is introduced through the inner pipe of a coaxial mixer and the aqueous solution of ammonia is introduced through the outer pipe, this will lead to a minor degree of incrustations.

In one embodiment of the present invention, the aqueous solution of transition metal salts is introduced through the outer pipe of a coaxial mixer and the aqueous solution of ammonia is introduced through the inner pipe, this will give access to different particle morphologies and particle sizes, especially (D50).

In one embodiment of the present invention, the inner pipe of said coaxial mixer has an inner diameter in the range of from 0.5 mm to 120 mm, preferred in the range from 5 mm to 50 mm, depending on the vessel size. The bigger the vessel, the bigger is the diameter of the inlet tip in order to establish a constant flow velocity.

In one embodiment of the present invention, the outer pipe of the coaxial mixer has an inner diameter in the range of from 1.2 to 10 times the inner diameter of the inner pipe, preferred 1.5 to 6 times.

Said pipes preferably have a circular profile.

In one embodiment of the present invention, the walls of the pipes have a thickness in the range of from 1 to 10 mm.

Said pipes may be made from PTFE (polytetrafluoroethylene), FEP (fluorinated ethylenepropylene copolymer), PFA (perfluoroalkoxy polymer), steel, stainless steel, or from steel or stainless steel coated with PTFE, FEP, or PFA (perfluoroalkoxy polymer), preference being given to stainless steel and stainless steel coated with PFA.

In one embodiment of the present invention, the pipes of the coaxial mixer are bent. In a preferred embodiment of the present invention, the pipes of the coaxial mixer are non-bent.

Said coaxial mixer may serve as coaxial nozzle.

In one embodiment of the present invention locations of the introduction of the aqueous solutions of transition metal salts and of ammonia are above the level of liquid, for example by 3 to 50 cm. In a preferred embodiment of the present invention, the locations of the introduction of the aqueous solutions of transition metal salts and of ammonia are below the level of liquid, for example by 5 to 150 cm, preferably larger than 20 cm up to 120 cm.

In one embodiment of the present invention the pH value at the point of the outlet of said at least two inlets is in the range of from 11 to 15, preferably from 12 to 14, determined at 23°C.

In one embodiment of the present invention the tips of said at least two inlets are outside of a vortex caused by the stirring in the stirred vessel.

In one embodiment of the present invention the tips of said at least two inlets are located above a stirrer element in a way that the flow around the outlets has a merely vertical flow direction from top to bottom.

In various embodiments, especially when the turbulence at the outlet of the at least two inlets is too low, precipitates of mixed metal (oxy)hydroxide form at the outlet of a coaxial mixer, and they may form incrustations. In a preferred embodiment of the present invention, in certain time intervals, the at least two inlets and preferably the coaxial mixer is flushed with water to physically remove transition metal (oxy)hydroxide incrustations. Said intervals may occur, for example, every 2 minutes up to every other hour, and said flushing period may last in the range of from 1 second to five minutes, preferably 1 to 30 seconds. Flushing intervals as short as possible are preferred in order to avoid unnecessary dilution of the reaction medium. In one embodiment of the present invention, said water may contain ammonia to maintain the pH value above 7.

Separately from the above at least two inlets, an aqueous solution of alkali metal hydroxide is added.

Alkali metal hydroxides may be selected from hydroxides of lithium, rubidium, cesium, potassium and sodium and combinations of at least two of the foregoing, preferred are potassium and sodium and combinations of the foregoing, and more preferred is sodium.

Aqueous solution of alkali metal hydroxide may have a concentration of hydroxide in the range from 0.1 to 12 mol/l, preferably 6 to 10 mol/l.

In one embodiment of the present invention, aqueous solution of alkali metal hydroxide may comprise ammonia or one or more organic amines, for example methylamine. It is preferred that no measurable amounts of organic amine are present. It is more preferred that the aqueous solution of alkali metal hydroxide contains neither organic amines nor ammonia.

In one embodiment of the present invention, aqueous solution of alkali metal hydroxide may comprise some carbonate or hydrogen carbonate. Technical grade potassium hydroxide usually contains some potassium (bi)carbonate, and technical grade of sodium hydroxide usually contains some sodium (bi)carbonate. Despite such content of alkali metal (bi)carbonate, in the context of the present invention the respective technical grade alkali metal hydroxide is referred to as alkali metal hydroxide for short.

Said aqueous solution of alkali metal hydroxide is introduced separately from the at least two inlets, for example in a distance from the point of introduction of the solution of the transition metal salts and of the ammonia that is at least 12 times the hydraulic diameter of the tip of the feed with the largest diameter.

The stirred vessel described above may additionally include one or more pumps, inserts, mixing units, baffles, wet grinders, homogenizers and stirred tanks working as a further compartment in which the precipitation takes place and preferably having a much smaller volume than the vessel described at the outset. Examples of particularly suitable pumps are centrifugal pumps and peripheral wheel pumps.

In a preferred embodiment of the present invention, though, such stirred vessel is void of any separate compartments, external loops or additional pumps.

In one embodiment of the present invention, the process according to the invention can be performed at a temperature in the range from 20 to 90°C, preferably 30 to 80°C and more preferably 35 to 75°C. The temperature is determined in the stirred vessel.

The process according to the invention can be performed under air, under inert gas atmosphere, for example under noble gas or nitrogen atmosphere, or under a defined mixture of air and inert gas, such as mixtures of from 2 to 40 vol% air in $N_2$, or under reducing gas atmosphere. Examples of reducing gases include, for example, CO and $SO_2$. Preference is given to working under inert gas atmosphere.

In one embodiment of the present invention, aqueous solution of transition metals and aqueous solution of alkali metal hydroxide have a temperature in the range of 10 to 75°C before they are contacted in stirred vessel.

The stirred vessel comprises a stirrer. Suitable stirrers may be selected from pitch blade turbines, rushton turbines, cross-arm stirrers, dissolver blades and propeller stirrers. Stirrers may be operated at rotation speeds that lead to an average energy input in the range from 0.1 to 10W/l, preferably in the range from 1 to 7W/l.

In embodiments wherein the stirred vessel is a continuous stirred tank reactor or a cascade of at least two stirred tank reactors, the respective stirred tank reactor(s) have an overflow system. Slurry containing precipitated mixed metal hydroxide of TM and a mother liquor. In the context of the present invention, mother liquor comprises water-soluble salts and optionally further additives present in solution. Examples of possible water-soluble salts include alkali metal salts of the counterions of transition metal, for example sodium acetate, potassium acetate, sodium sulfate, potassium sulfate, sodium nitrate, potassium nitrate, sodium halide, potassium halide, including the corresponding ammonium salts, for example ammonium nitrate, ammonium sulfate and/or ammonium halide. Mother liquor most preferably comprises sodium sulfate and ammonium sulfate and ammonia.

In one embodiment of the present invention, the inventive process is performed in a vessel that is equipped with a clarifier. In a clarifier, mother liquor is separated from precipitated mixed metal hydroxide of TM and the mother liquor is withdrawn.

By performing the inventive process, an aqueous slurry is formed. From said aqueous slurry, a particulate mixed hydroxide may be obtained by solid-liquid separation steps, for example filtering, spray-drying, drying under inert gas or air, or the like. If dried under air, a partial oxidation may take place, and a mixed oxyhydroxide of TM is obtained.

Precursors obtained according to the inventive process are excellent starting materials for cathode active materials which are suitable for producing batteries with a maximum volumetric energy density.

We have observed that by performing the inventive process it is possible to run the coprecipitation at nickel and manganese concentrations in the bulk which lead to an accumulation of Ni simultaneously in larger secondary particles as well as in the cores of secondary particles independent of their size, preferably at the expense of Mn. This feature remains in the cathode active material made from precursors made according to the present invention even after calcination. Without wishing to be bound by any theory, we assume that the above features provide excellent cycling stability.

By performing the inventive process, precursors for lithium ion batteries are obtained. Precursors made according to the inventive process are particulate transition metal (oxy)hydroxides according to general formula (II)

$$Ni_aM^1_bMn_cO_x(OH)_y(CO_3)_t \qquad (II)$$

where the variables are each defined as follows:

$M^1$     is Co or a combination of Co and at least one metal selected from Ti, Zr, Al and Mg,

a     is in the range from 0.15 to 0.95, preferably 0.5 to 0.9,

b     is in the range from zero to 0.35, preferably 0.03 to 0.2,

c      is in the range from zero to 0.8, preferably 0.05 to 0.65,

where a + b + c = 1.0 and at least one of b and c is greater than zero,

$$0 \leq x < 1, \ 1 < y \leq 2.2, \ \text{and} \ 0 \leq t \leq 0.3,$$

and said precursors have a Brucite type structure whose X-ray diffraction pattern displays C19 stacking faults with a transition probability $P_x$ in the range of from 0 to 0.25% and 3R stacking faults with a transition probability $P_y$ in the range of from 0 to 0.15%. The C19 stacking faults refer to $CdCl_2$ type stacking (faults) within the Brucite type structure and the 3R stacking faults refer to CrOOH type stacking (faults) within the Brucite type structure. A detailed description of stacking faults and the determination of the transition probabilities can be found in "S. Bette, B. Hinrichsen, D. Pfister, R. Dinnebier, J. Appl. Cryst. 2020, 53.

In one embodiment of the present invention at least 60 vol-% of the secondary particles of inventive (oxy)hydroxide are agglomerated from primary particles that are essentially radially oriented, and said particulate transition metal (oxy)hydroxide has a form factor in the range of from 0.85 to 1 and an axis ratio of the bounding box in the range of from 1.00 to 1.20.

To determine the axis ratio of the bounding box of a single particle, the smallest possible, rectangular bounding box is set around the top view SEM image of a particle. The axis ratio is calculated from the length of the two sides $a_1$ and $a_2$ (with $a_1 \geq a_2$) by: axis ratio of the bounding box = $a_1/a_2$.

While, a perfect sphere would possess an axis ratio of the bounding box of 1.0, all deviations from perfect sphericity lead to an axis ratio > 1.0.

In one embodiment, the variables in formula (II) are defined as follows:

a      is in the range of from 0.8 to 0.95,

$M^1$      is a combination of Co and at least one element selected from Ti, Zr, Al and Mg, with 95 mole-% up to 99.9 mole-% of $M^1$ being Co,

b      is in the range of from 0.03 to 0.2,

c      is zero,

and

$$a + b + c = 1.0.$$

In another embodiment, the variables in formula (II) are defined as follows:

a      is in the range of from 0.6 to 0.95,

$M^1$      is Co or a combination of Co and at least one element selected from Ti, Zr, Al and Mg, with 95 mole-% up to 99.9 mole-% of $M^1$ being Co,

b      is in the range of from 0.03 to 0.2,

c      is in the range of from 0.05 to 0.2,

and

$$a + b + c = 1.0.$$

In another embodiment, the variables in formula (II) are defined as follows:

a      is in the range of from 0.15 to 0.5,

b      is from zero to 0.05,

c      is in the range of from 0.55 to 0.8,

and

$$a + b + c = 1.0.$$

In yet another embodiment, the variables in formula (I) are defined as follows:

a    is in the range of from 0.6 to 0.95,
b    is zero,
c    is in the range of from 0.4 to 0.05,

and

$$a + c = 1.0.$$

The primary particles may be needle-shaped or platelets or a mixture of both. The term "radially oriented" then refers to the length in case of needle-shaped or length or breadth in case of platelets being oriented in the direction of the radius of the respective secondary particle.

The portion of radially oriented primary particles may be determined, e.g., by SEM (Scanning Electron Microscopy) of a cross-section of at least 5 secondary particles.

The X-ray diffraction pattern of said (oxy)hydroxide displays a Brucite type structure having C19 stacking faults with a transition probability $P_x$ in the range of from 0 to 0.25% and 3R stacking faults with a transition probability $P_y$ in the range of from 0 to 0.15%

"Essentially radially oriented" does not require a perfect radial orientation but includes that in an SEM analysis, a deviation to a perfectly radial orientation is at most 11 degrees, preferably at most 5 degrees.

Preferably, at least 60% of the secondary particle volume is filled with radially oriented primary particles. Preferably, only a minor inner part, for example at most 40%, preferably at most 20%, of the volume of those particles is filled with non-radially oriented primary particles, for example, in random orientation.

Inventive particulate transition metal (oxy)hydroxides have a form factor in the range of from 0.85 to 1 and an axis ratio of the bounding box in the range of from 1.00 to 1.20.

In one embodiment, the lateral crystallite size of precursor made according to the inventive process is at least 16 nm, preferably in the range of from 16 nm to 200 nm, more preferably from 30 to 150 nm. The lateral crystallite size is determined by X-ray diffraction using Mo-radiation and fitting the diffracted reflection width at about d = 2.69 Å (33.3° $2\theta$). This reflects the crystallite size along the basal plane of the Brucite structure (space group number 164) with the Miller index of (1 0 0).

In one embodiment, particulate transition metal (oxy)hydroxide made according to the inventive process has a total pore/intrusion volume in the range of from 0.033 to 0.1 ml/g, preferably 0.035 to 0.07 ml/g in the pore size range from 20 to 600 Å, determined by $N_2$ adsorption, determined in accordance with DIN 66134 (1998), when the sample preparation for the $N_2$ adsorption measurement is done by degassing at 120°C for 60 minutes.

In a preferred embodiment, the average pore size of the particulate transition metal (oxy)hydroxide made according to the inventive process is in the range of from 100 to 250 Å, determined by $N_2$ adsorption.

In one embodiment, particulate transition metal (oxy)hydroxide made according to the inventive process has an average secondary particle diameter D50 in the range of from 2 to 20 $\mu$m, preferably 4 to 16 $\mu$m and even more preferably 10 to 16 $\mu$m.

In one embodiment, precursors made according to the inventive process have a specific surface according to BET (hereinafter also "BET-Surface") in the range of from 2 to 70 m²/g, preferably from 4 to 50m²/g. The BET surface may be determined by nitrogen adsorption after outgassing of the sample at 200°C for 30 minutes or more and beyond this accordance with DIN ISO 9277:2010.

In one embodiment, precursors made according to the inventive process have a particle size distribution [(D90) - (D10)] divided by (D50) is in the range of from 0.5 to 2, preferably from 0.5 to 1.5.

In one embodiment, precursors made according to the inventive process have an interstratification of water or carbon dioxide molecules into the brucite-type host structure with a transition probability $P_{car}$ in the range of from 0 to 0.20% determined from the X-ray diffraction pattern.

Precursors obtained according to the inventive process are excellent starting materials for cathode active materials which are suitable for producing batteries with a high volumetric energy density and excellent cycling stability. Such cathode active materials are made by mixing with a source of lithium, e.g., $Li_2O$ or LiOH or $Li_2CO_3$, each water-free or as hydrates, and calcination, for example at a temperature in the range of from 600 to 1000°C. Further disclosed is thus the use of precursors made according to the inventive process for the manufacture of cathode active materials for lithium ion batteries, and furthermore, a process for the manufacture of cathode active material for lithium ion batteries is disclosed - hereinafter also referred to as calcination - wherein said process comprises the steps of mixing a precursor made according to the inventive process with a source of lithium and thermally treating said mixture at a temperature in the range of from 600 to 1000°C. Preferably, the ratio of precursor and source of lithium in such process is selected that the molar ratio of Li and TM is in the range of from 0.95:1 to 1.2:1.

Examples of calcinations include heat treatment at a temperature in the range of from 600 to 990°C, preferably 650 to 850°C. The terms "treating thermally" and "heat treatment" are used interchangeably in the context of the present invention.

In one embodiment, the mixture obtained for the calcination is heated to 600 to 900 °C with a heating rate of 0.1 to 10 °C/min.

In one embodiment, the temperature is ramped up before reaching the desired temperature of from 600 to 900°C, preferably 650 to 800°C. For example, first the mixture obtained from step (d) is heated to a temperature to 350 to 550°C and then held constant for a time of 10 min to 4 hours, and then it is raised to 650°C up to 800°C and then held at 650 to 800 for 10 minutes to 10 hours.

In one embodiment, the calcination is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment, the calcination is performed in an oxygen-containing atmosphere, for example in a nitrogen-air mixture, in a rare gas-oxygen mixture, in air, in oxygen or in oxygen-enriched air. In a preferred embodiment, the atmosphere in step (d) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In one embodiment, the calcination is performed under a stream of gas, for example air, oxygen and oxygen-enriched air. Such stream of gas may be termed a forced gas flow. Such stream of gas may have a specific flow rate in the range of from 0.5 to 15 $m^3/h \cdot kg$ material according to general formula $Li_{1+x}TM_{1-x}O_2$. The volume is determined under normal conditions: 298 Kelvin and 1 atmosphere. Said stream of gas is useful for removal of gaseous cleavage products such as water and carbon dioxide.

In one embodiment, the calcination has a duration in the range of from one hour to 30 hours. Preferred are 10 to 24 hours. The time at a temperature above 600°C is counted, heating and holding but the cooling time is neglected in this context.

The present invention is further illustrated by two drawings and by working examples as well as further diagrams.

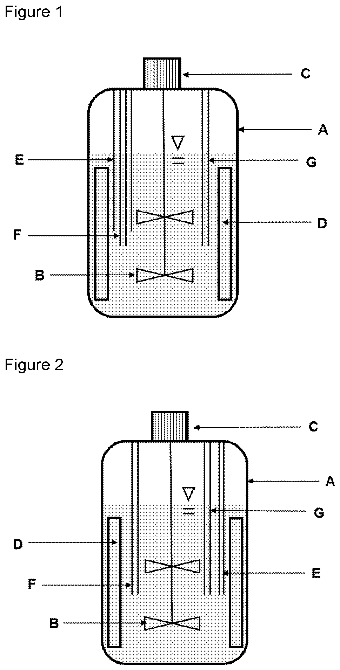

Brief description of the drawing, Figure 1:

    A: Stirred vessel
    B: Stirrer
    C: Engine for stirrer
    D: Baffles
    E: Wall of outer pipe of coaxial nozzle containing $NH_3$ solution
    F: Wall of inner pipe of coaxial nozzle containing metal sulfate solution
    G: Wall of pipe for NaOH solution

Brief description of the drawing, Figure 2:

    A: Stirred vessel
    B: Stirrer
    C: Engine for stirrer
    D: Baffles
    E: Wall of pipe for $NH_3$ solution
    F: Wall of pipe metal sulfate solution
    G: Wall of pipe for NaOH solution

Working examples:

General remarks:

The nickel concentrations of precursors were analyzed by inductively coupled plasma optical emission spectrometry (ICP-OES) after dissolving the samples in concentrated hydrochloric acid.

To determine form factor and axis ratio of samples, both properties were first determined for at least 50 individual particles of each sample and then averaged.

The form factor of the individual particles was calculated from the perimeter and area determined from top view SEM images:

$$\text{Form factor} = (4\pi \cdot \text{area})/(\text{perimeter})^2$$

While, a perfect sphere would possess a form factor of 1.0, any deviation from perfect sphericity lead to form factors < 1.0

To determine the axis ratio of the bounding box of a single particle, the smallest possible, rectangular bounding box is set around the top view SEM image of a particle. The axis ratio is calculated from the length of the two sides $a_1$ and $a_2$ (with $a_1 \geq a_2$) by: axis ratio of the bounding box = $a_1/a_2$.

While, a perfect sphere would possess an axis ratio of the bounding box of 1.0, all deviations from perfect sphericity lead to an axis ratio > 1.0.

The lateral crystallite size as well as the transition probability $P_x$ of C19 stacking faults, the transition probability $P_y$ of 3R stacking faults and the transition probability $P_{car}$ of interstratification of water or carbon dioxide were determined on the basis of X-ray diffraction. The diffracted peak width was fitted by using DIFFRAC.TOPAS V6 software (Bruker AXS GmbH. Instrumental broadening was considered during the peak fitting, leading to a separation of the instrumental from the sample broadening. The sample contribution is determined by using a single Lorentzian profile function that is defined by the following equation:

$$\beta = \frac{\lambda}{L \, cos\theta}$$

I. Manufacture of the precursors made according to the inventive process and of comparative precursors

I.1 Manufacture of precursor TM-OH.1:

The example was carried out in a 2.4L stirred vessel equipped with baffles and a cross-arm stirrer, with a coaxial mixer and a separate dosing tube for NaOH separated by 4 cm, see Figure 1, in the context of the working examples also referred to as "Vessel 1". Vessel 1 had a constant nitrogen overflow during all reactions. The coaxial mixer as well as the separate dosing tube for NaOH were located in the vessel so that the outlets were approximately 5 cm below the liquid level. The coaxial mixer consisted of two coaxially arranged pipes made of stainless steel. The inner and outer diameter of the inner circular pipe was 1.1 mm and 1.6 mm, respectively. The inner and outer diameter of the outer circular pipe was 2 mm and 4 mm, respectively. The separate dosing tube had an outer diameter of 6 mm, an inner diameter of 2 mm.

Vessel 1 was charged with 2 l of deionized water and the temperature of the vessel was set to 55°C. The stirrer element was activated and constantly operated at 1000 rpm (average input -4.5 W/l). An aqueous solution of $NiSO_4$, $CoSO_4$ and $MnSO_4$ (molar ratio 91:4.5:4.5, total transition metal concentration: 1.65 mol/kg), aqueous sodium hydroxide (25wt% NaOH) and aqueous ammonia solution (25wt% ammonia) were simultaneously introduced into the vessel. The aqueous transition metal solution was introduced via the inner pipe of the coaxial mixer while the aqueous ammonia solution was introduced via the outer pipe of the coaxial mixer. The aqueous sodium hydroxide solution was introduced through the separate dosing tube $t_1$. The distance between the outlets of the two coaxially arranged pipes was in the range of 5mm.

The molar ratio between ammonia and transition metal was adjusted to 0.25. The sum of volume flows was set to adjust the mean residence time to 5 hours. The flow rate of the NaOH solution was adjusted by a pH regulation circuit to keep the pH value in the stirred vessel at a constant value of 12.0. The apparatus was operated continuously keeping the liquid level in the vessel constant. A mixed hydroxide of Ni, Co and Mn was collected via free overflow from the vessel. The resulting slurry contained about 120g/l mixed hydroxide of Ni, Co and Mn. The slurry was washed with deionized water and an aqueous solution of sodium hydroxide (1kg of 25 wt% aqueous sodium hydroxide solution per kg of solid hydroxide), filtered and dried at 120 °C overnight to obtain the precursor TM-OH.1. TM-OH.1 had an average particle diameter (D50) of 12.0 µm, a value of (D90-D10)/D50 of 1.40, a tap density of 1.76 g/l and a BET surface of 26.4 m2/g.

I.2 Manufacture of comparative precursor C-TM-OH.2:

The example was carried out in a 2.4L stirred vessel equipped with baffles and a cross-arm stirrer, and three dosing tubes, one for an aqueous solution of NaOH, one for ammonia solution and one for the metal sulfate solution, see Figure 2. The feed for the metal sulfate solution was separated from both other tubes by 8 cm each, while the tube for ammonia was separated by 2.5 cm from the tube for the NaOH solution. All tubes had an outer diameter of 6 mm, an inner diameter of 2 mm and were located in the vessel so that the corresponding outlet was approximately 5 cm below the liquid level. In the context of said working examples this vessel is also referred to as "vessel 2". Vessel 2 had a constant nitrogen overflow during all reactions.

Vessel 2 was charged with 2 l of deionized water and the temperature of the vessel was set to 55°C. The stirrer element was activated and constantly operated at 1000 rpm (average input -4.5 W/l). An aqueous solution of $NiSO_4$, $CoSO_4$ and $MnSO_4$ (molar ratio 91:4.5:4.5, total transition metal concentration: 1.65 mol/kg), aqueous sodium hydroxide (25wt% NaOH) and aqueous ammonia solution (25wt% ammonia) were simultaneously introduced into the vessel by the corresponding tube.

The molar ratio between ammonia and transition metal was adjusted to 0.25. The sum of volume flows was set to adjust the mean residence time to 5 hours. The flow rate of the NaOH solution was adjusted by a pH regulation circuit to keep the pH value in the stirred vessel at a constant value of 12.1. The apparatus was operated continuously keeping the liquid level in the vessel constant. A mixed hydroxide of Ni, Co and Mn was collected via free overflow from the vessel. The resulting slurry contained about 120g/l mixed hydroxide of Ni, Co and Mn. The slurry was washed with deionized water and an aqueous solution of sodium hydroxide (1kg of 25 wt% aqueous sodium hydroxide solution per kg of solid hydroxide), filtered and dried at 120 °C overnight to obtain the comparative precursor C-TM-OH.2. C-TM-OH.2 had an average particle diameter (D50) of 10.6 µm, a value of (D90-D10)/D50 of 1.35, a tap density of 1.92 g/l and a BET surface of 30.7 m2/g.

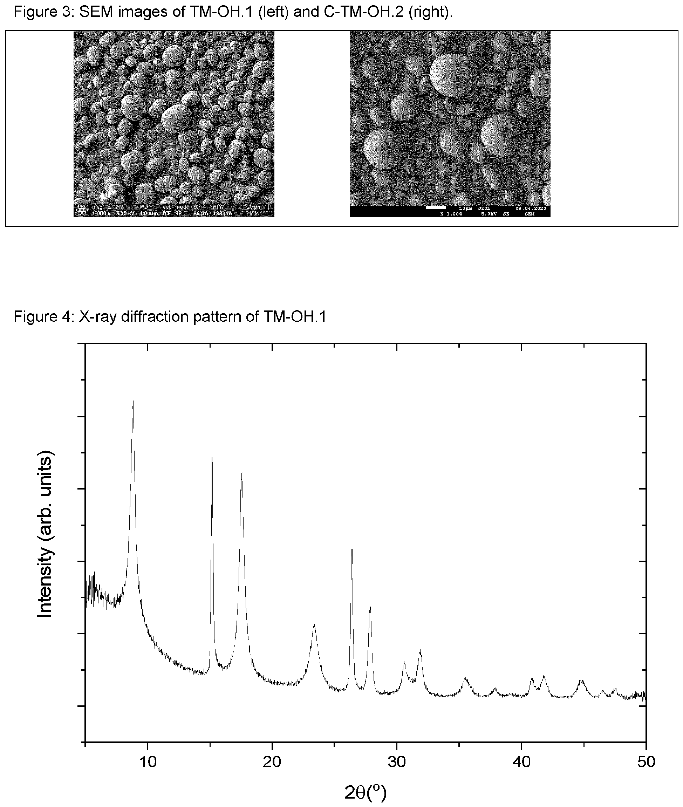

SEM images of TM-OH.1 and C-TM.OH.2 are disclosed in Figure 3.

Powder X-ray Diffraction (PXRD) data was collected using a laboratory diffractometer (D8 Discover, Bruker AXS GmbH, Karlsruhe). The instrument was set up with a Molybdenum X-ray tube. The characteristic K-alpha radiation was monochromatized using a bent Germanium Johansson type primary monochromator. Data was collected in the Bragg-Brentano reflection geometry in a 2θ range from 5.0 to 50°, applying a step size of 0.019°. A LYNXEYE area detector was utilized to collect the scattered X-ray signal.

ForXRD measurements, the precursors were ground using an IKA Tube Mill and an MT40.100 disposable grinding chamber. The powder was placed in a sample holder and flattened using a glass plate.

Rietveld refinement analyses of the microstructures of the precursor materials were performed using DIFFRAC.TOPAS V6 software (Bruker AXS GmbH).

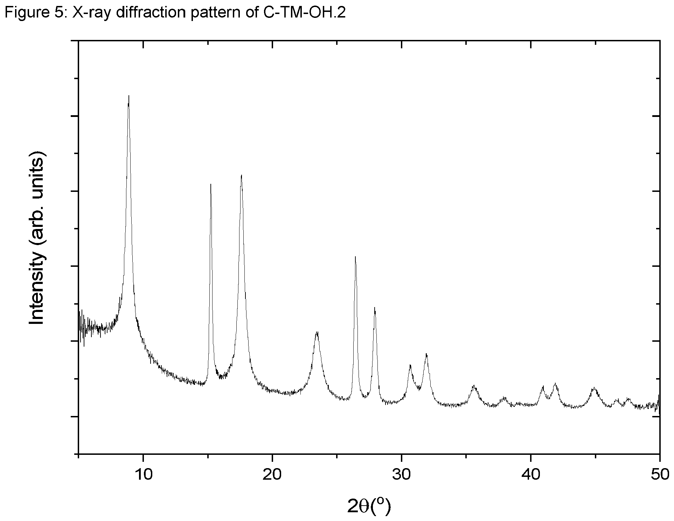

XRD patterns of TM-OH.1 and C-TM-OH.2 are disclosed in Figure 5 and 5. It should be noted that, e.g., the reflections at 2Θ of about 15 and 17.5 ° are different in height.

Table 1: Overview over the different precursor properties

| precursor | Form factor | Axis ratio BB | $P_x$ [%] | $P_y$ [%] | $P_{car}$ [%] | Lateral crystallite size [nm] |
|---|---|---|---|---|---|---|
| TM-OH.1 | 0.88 | 1.26 | 0.11 | 0.07 | 0.08 | 62 |
| C-TM-OH.2 | 0.88 | 1.27 | 0.12 | 0.06 | 0.10 | 14 |

Form factor and axis ratio were determined from the top view images of the particles shown in Figure 3. The transition probabilities $P_x$, $P_y$ and $P_{car}$ and the lateral crystallite size were determined from the corresponding X-ray diffraction patterns shown in Figure 4 and Figure 5.

II. Manufacture of cathode active materials, and electrode manufacture

II.1 Manufacture of cathode active material CAM.1 and the comparative cathode active material C-CAM.2:

To obtain cathode active materials, the respective precursors were mixed with $LiOH \cdot H_2O$, $Al_2O_3$ and $Zr(OH)_4$ in molar ratio of Li:(Ni+Co+Mn) of 1.01:1, Al Li:(Ni+Co+Mn) of 0.02:1, Zr Li:(Ni+Co+Mn) of 0.0025:1, poured into a alumina crucible and heated at 350°C for 4 hours and 720°C for 6 hours under oxygen atmosphere (10 exchanges/h) using a heating rate of 3 °C/min. The resultant material was cooled to ambient temperature at a cooling rate of 10 °C / min and subsequently sieved using a mesh size of 30 $\mu$m to obtain the inventive cathode active material CAM.1 from precursor TM-OH.1 and the comparative cathode active material C-CAM.2 from the comparative precursor C-TM-OH.2.

II.2 Manufacture of electrodes and testing

Electrode manufacture and Half-Cell Electrochemical measurements:
Electrodes contained 94% CAM, 3% carbon black (Super C65) and 3% binder (polyvinylidene fluoride, Solef 5130). Slurries were mixed in N-methyl-2-pyrrolidone and cast onto aluminum foil by doctor blade. After drying of the electrodes for 6 h at 105 °C in vacuo, circular electrodes were punched, weighed and dried at 120 °C under vacuum for 12 hours before entering in an Ar filled glove box.

Coin-type electrochemical cells, were assembled in an argon-filled glovebox. The positive 14 mm diameter (loading $8.0\pm0.5$ mg cm$^{-2}$) electrode was separated from the 0.58 mm thick Li foil by a glass fiber separator (Whatman GF/D). An amount of 95 $\mu$l of 1 M LiPF6 in ethylene carbonate (EC): ethylmethyl carbonate (EMC), 3:7 by weight, was used as the electrolyte. Cells were galvanostatically cycled at a Maccor 4000 battery cycler between 3.1 and 4.3 V at room temperature by applying the following C-rates:

Table 2: Electrochemical test procedure of the coin half cells.

|  | Charge | Discharge |
|---|---|---|
| Cycle 1 | 0.1 C | 0.1 C |
| Cycle 2-6 | 0.2 C+ CV* | 0.2 C |
| Cycle 7 & 8 | 0.5 C + CV* | 0.5 C |
| Cycle 9 & 10 | 0.5 C + CV* | 2.0 C |
| Cycle 11 & 12 | 0.5 C + CV* | 3.0 C |
| Cycle 13 & 14 | 0.5 C + CV* | 0.5 C |
| Cycle 15 | Resistance measurement | |
| Cycle 16 - 40 | 0.5 C + CV* | 1.0 C |
| Cycle 41 + 42 | 0.5 C + CV* | 0.5 C |
| Cycle 43 | Resistance measurement | |
| Cycle 44 - 68 | 0.5 C + CV* | 1.0 C |

After charging at the listed C-rates, all charging steps except the first were finished by a constant voltage step (CV*) for 1 hour, or until the current reached 0.02C.

During the resistance measurement (conducted every 25 cycles at 25 °C), the cell was charged at 0.2 C to reach 50% state of charge, relative to the previous discharge capacity. To equilibrate the cell, a 30 min open circuit step followed. Finally, a 2.5 C discharge current was applied for 30 s to measure the resistance. At the end of the current pulse, the cell was again equilibrated for 30 min in open circuit and further discharged at 0.2 C to 3 .0 V.

Table 3: Discharge capacity (DC) and coulombic efficiency (CE) of comparative cathode active material C-CAM.2 and inventive cathode active materials CAM.1.

| CAM | DC 1st cycle [mA·h/g] | CE 1st cycle | DC 5th cycle [mA·h/g] | DC 25th cycle [mA·h/g] | DC 50th cycle [m·Ah/g] |
|---|---|---|---|---|---|
| CAM.1 | 209 | 91.0 % | 199 | 175 | 162 |
| C-CAM.2 | 199 | 88.3 % | 190 | 170 | 159 |

**Claims**

1. Process for precipitating a mixed hydroxide of TM wherein TM comprises Ni and at least one of Co and Mn and, optionally, Al, Mg, Zr or Ti from an aqueous solution of salts of such transition metals or of Al or of Mg, wherein such process is carried out in a stirred vessel and comprises the step of introducing a 1 to 40% by weight aqueous solution of ammonia and an aqueous solution of transition metal salts through at least two inlets into said stirred vessel wherein an aqueous solution of alkali metal hydroxide is introduced separately from the at least two inlets, and wherein at least two inlets are designed as a coaxial mixer that comprises two coaxially arranged pipes through which an aqueous solution of ammonia and an aqueous solution of transition metal salts are introduced into said stirred vessel.

2. Process according to claim 1 wherein the locations of the introduction of the aqueous solutions of transition metal salts and of ammonia are below the level of liquid in the stirred vessel.

3. Process according to claim 1 wherein the locations of the introduction of the aqueous solutions of transition metal salts and of ammonia are above the level of liquid in the stirred vessel.

4. Process according to any of the preceding claims wherein the solution of transition metal salts is introduced through the inner pipe of the coaxial mixer and the solution of ammonia is introduced through the outer pipe.

5. Process according to any of the preceding claims wherein said aqueous solution of ammonia contains alkali metal hydroxide in a molar ratio to the metal ions that is lower than 1.8.

6. Process according to any of the preceding claims wherein the stirred vessel is a continuous stirred tank reactor.

7. Process according to any of the preceding claims wherein in certain intervals, the coaxial mixer is flushed with water to physically remove transition metal (oxy)hydroxide incrustations.

8. Process according to any of the preceding claims wherein the velocity for introducing aqueous solution of ammonia and aqueous solution of transition metal salts is in the range of from 0.01 to 10 m/s.

9. Process according to any of the preceding claims wherein TM contains metals according to formula (I)

$$Ni_aM^1_bMn_c \qquad (I)$$

where the variables are each defined as follows:

$M^1$ is Co or a combination of Co and at least one metal selected from Ti, Zr, Al and Mg,
a is in the range from 0.15 to 0.95,
b is in the range from zero to 0.35,
c is in the range from zero to 0.8,

and a + b + c = 1.0 and at least one of b and c is greater than zero.

**Patentansprüche**

1. Verfahren zum Ausfällen eines gemischten Hydroxids von TM, wobei TM Ni und mindestens eines von Co und Mn und gegebenenfalls Al, Mg, Zr oder Ti umfasst, aus einer wässrigen Lösung von Salzen derartiger Übergangsmetalle oder von Al oder von Mg, wobei ein derartiges Verfahren in einem Rührbehälter durchgeführt wird und den Schritt des Eintragens einer 1 bis 40 gew.-%igen wässrigen Lösung von Ammoniak und einer wässrigen Lösung von Übergangsmetallsalzen durch mindestens zwei Einlässe in den Rührbehälter umfasst, wobei eine wässrige Lösung von Alkalimetallhydroxid separat von den mindestens zwei Einlässen eingetragen wird und wobei mindestens zwei Einlässe als Koaxialmischer ausgestaltet sind, welcher zwei koaxial angeordnete Rohre umfasst, durch die eine wässrige Lösung von Ammoniak und eine wässrige Lösung von Übergangsmetallsalzen in den Rührbehälter eingetragen wird.

2. Verfahren nach Anspruch 1, wobei die Eintragsstellen der wässrigen Lösungen von Übergangsmetallsalzen und von Ammoniak unterhalb des Flüssigkeitsspiegels im Rührbehälter liegen.

3. Verfahren nach Anspruch 1, wobei die Eintragsstellen der wässrigen Lösungen von Übergangsmetallsalzen und von Ammoniak oberhalb des Flüssigkeitsspiegels im Rührbehälter liegen.

4. Verfahren nach einem der vorhergehenden Ansprüche, wobei die Lösung von Übergangsmetallsalzen durch das innere Rohr des Koaxialmischers eingetragen wird und die Ammoniaklösung durch das äußere Rohr eingetragen wird.

5. Verfahren nach einem der vorhergehenden Ansprüche, wobei die wässrige Ammoniaklösung Alkalimetallhydroxid in einem Molverhältnis zu den Metallionen von weniger als 1,8 enthält.

6. Verfahren nach einem der vorhergehenden Ansprüche, wobei es sich bei dem Rührbehälter um einen kontinuierlichen Rührkesselreaktor handelt.

7. Verfahren nach einem der vorhergehenden Ansprüche, wobei der Koaxialmischer in bestimmten Intervallen mit Wasser gespült wird, um Übergangsmetall(oxy)hydroxid-Verkrustungen physikalisch zu entfernen.

8. Verfahren nach einem der vorhergehenden Ansprüche, wobei die Geschwindigkeit für das Eintragen von wässriger Ammoniaklösung und wässriger Lösung von Übergangsmetallsalzen im Bereich von 0,01 bis 10 m/s liegt.

9. Verfahren nach einem der vorhergehenden Ansprüche, wobei TM Metalle gemäß Formel (I) enthält:

$$Ni_aM^1_bMn_c \qquad (I)$$

wobei die Variablen jeweils wie folgt definiert sind:

M$^1$ steht für Co oder eine Kombination von Co und mindestens einem Metall, das aus Ti, Zr, Al und Mg ausgewählt ist,
a liegt im Bereich von 0,15 bis 0,95,
b liegt im Bereich von null bis 0,35,
c liegt im Bereich von null bis 0,8,
und a + b + c = 1,0, und mindestens eines von b und c ist größer als null.

**Revendications**

1. Procédé pour la précipitation d'un hydroxyde mixte de TM, TM comprenant Ni et au moins l'un parmi Co et Mn et, éventuellement, Al, Mg, Zr ou Ti à partir d'une solution aqueuse de sels de tels métaux de transition ou de Al ou de Mg, un tel Procédé étant réalisé dans un récipient agité et comprenant l'étape d'introduction d'une solution aqueuse à 1 à 40 % en poids d'ammoniac et une solution aqueuse de sels de métaux de transition à travers au moins deux entrées dans ledit récipient agité, une solution aqueuse d'hydroxyde de métal alcalin étant introduite séparément des au moins deux entrées, et au moins deux entrées étant conçues comme un mélangeur coaxial qui comprend deux tuyaux agencés de manière coaxiale à travers lesquels une solution aqueuse d'ammoniac et une solution aqueuse de sels de métaux de transition sont introduites dans ledit récipient agité.

2. Procédé selon la revendication 1, les emplacements de l'introduction des solutions aqueuses de sels de métaux de transition et d'ammoniac étant en dessous du niveau de liquide dans le récipient agité.

3. Procédé selon la revendication 1, les emplacements de l'introduction des solutions aqueuses de sels de métaux de transition et d'ammoniac étant au-dessus du niveau de liquide dans le récipient agité.

4. Procédé selon l'une quelconque des revendications précédentes, la solution de sels de métaux de transition étant introduite à travers le tuyau intérieur du mélangeur coaxial et la solution d'ammoniac étant introduite à travers le tuyau extérieur.

5. Procédé selon l'une quelconque des revendications précédentes, ladite solution aqueuse d'ammoniac contenant de l'hydroxyde de métal alcalin en un rapport molaire par rapport aux ions métalliques qui est inférieur à 1,8.

6. Procédé selon l'une quelconque des revendications précédentes, le récipient agité étant un réacteur à réservoir agité continu.

7. Procédé selon l'une quelconque des revendications précédentes, à certains intervalles, le mélangeur coaxial étant rincé avec de l'eau pour éliminer physiquement des incrustations d' (oxy)hydroxyde de métal de transition.

8. Procédé selon l'une quelconque des revendications précédentes, la vitesse pour l'introduction de la solution aqueuse d'ammoniac et de la solution aqueuse de sels de métaux de transition étant dans la plage allant de 0,01 à 10 m/s.

9. Procédé selon l'une quelconque des revendications précédentes, TM contenant des métaux selon la formule (I)

$$Ni_aM^1{}_bMn_c \qquad (I)$$

les variables étant chacune définies comme suit :

M$^1$ étant Co ou une combinaison de Co et d'au moins un métal choisi parmi Ti, Zr, Al et Mg,
a étant dans la plage de 0,15 à 0,95,
b étant dans la plage de zéro à 0,35,
c étant dans la plage de zéro à 0,8,
et a + b + c = 1,0 et au moins l'un parmi b et c étant supérieur à zéro.

Figure 1

Figure 2

Figure 3: SEM images of TM-OH.1 (left) and C-TM-OH.2 (right).

Figure 4: X-ray diffraction pattern of TM-OH.1

Figure 5: X-ray diffraction pattern of C-TM-OH.2

**EP 4 196 444 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1189296 A
- WO 2012095381 A
- WO 2013117508 A
- WO 2019185433 A

**Non-patent literature cited in the description**

- **S. BETTE ; B. HINRICHSEN ; D. PFISTER ; R. DIN-NEBIER.** *J. Appl. Cryst.,* 2020, vol. 53